# EUROPEAN PATENT APPLICATION

(11) **EP 4 454 895 A1**
(43) Date of publication of application: **30.10.2024**
(21) Application number: 22909054.3
(22) Date of filing: 09.03.2022
(51) Int. Cl.: B41M 5/00

(54) **METHOD FOR PRINTING OBJECT TO BE COLORED, AND DEVICE AND STORAGE MEDIUM**

(30) Priority: 22.12.2021 CN 202111576770
(71) Applicant: HANGZHOU HONGHUA DIGITAL TECHNOLOGY STOCK COMPANY LTD., Binjiang District Hangzhou, Zhejiang 310057 (CN)
(72) Inventor: HUANG, Bo, Hangzhou Zhejiang 310057 (CN); JIN, Xiaotuan, Hangzhou Zhejiang 310057 (CN); ZHOU, Hua, Hangzhou Zhejiang 310057 (CN); YING, Shuangshuang, Hangzhou Zhejiang 310057 (CN)
(74) Representative: Canzler & Bergmeier Patentanwälte Partnerschaft mbB
(86) International application number: PCT/CN2022/079989
(87) International publication number: WO 2023/115714

(57) **Abstract**

Disclosed are a method for printing an object to be colored, and a computing device and a storage medium. The method comprises: making features of colors, which are output by a plurality of coloring devices (110), conform to a predetermined coloring consistency condition (202); determining second mapping relationship data of a reference coloring device comprised in the plurality of coloring devices (204); associating the determined second mapping relationship data with the plurality of coloring devices (206); acquiring a printing instruction regarding a plurality of objects to be colored (208); on the basis of the second mapping relationship data, and spatial data and attribute information of a target color, generating spatial representation data, which is associated with the plurality of said objects, of the target color (210); and on the basis of the spatial representation data of the target color, making at least some of the plurality of coloring devices respectively perform digital printing on the plurality of said objects, so as to output the target color (212). The method can improve the consistency of colors actually presented by a plurality of objects to be colored that are printed by different coloring devices.

## Description

### FIELD

The present disclosure generally relates to digital printing, and more specifically, to a method, a device, and a storage medium for printing an object to be colored.

### BACKGROUND

Traditional schemes for printing objects to be colored (such as but not limited to decorative materials) are that, for example, a digital printing device prints an object to be colored based on color setting data of a sample of the object to be colored or a color number selected by a designer. Since there are differences between different digital printing devices in printheads, inks, etc., as well as differences in the material of the object to be colored, therefore, even based on the same color setting data, colors and effects actually printed by different printing devices are not the same. In addition, the color control parameters of the digital printing device from different manufacturers are not uniform. Therefore, even the designer designs uniform colors for different objects to be colored (such as but not limited to wall materials and floor materials), due to the lack of uniform color control parameters among manufacturers of different objects to be colored, it finally results in the unification effect of the color presented by the objects to be colored printed by different manufacturers is quite different from the design draft.

In summary, the traditional schemes for printing objects to be colored have the disadvantages that: it is difficult to achieve consistency in actual color presented by a plurality of objects to be colored that are printed by different printing devices (especially printing devices of different manufacturers), and it is difficult to ensure that the actual color presented by the object to be colored is consistent with the designed color.

### SUMMARY

The present disclosure provides methods, computing devices, and computer storing medium for printing an object to be colored, which may not only effectively improve the consistency of actual color presented by a plurality of objects to be colored that are printed by different coloring devices but may also effectively improve the consistency between the actual color presented by the object to be colored and the designed color.

According to a first aspect of the present disclosure, there is provided a method for printing an object to be colored. The method comprises: adjusting a plurality of coloring devices arranged in a distributed manner, so that output color features of the plurality of coloring devices conform to a predetermined coloring consistency condition; determining a second mapping relationship data of a reference coloring device included in the plurality of coloring devices, wherein the second mapping relationship data indicates a mapping relationship between a plurality of standard colors in a predetermined standard color set and a plurality of output colors of the reference coloring device; associating the determined second mapping relationship data with the plurality of coloring devices; acquiring a printing instruction related to a plurality of objects to be colored, wherein the printing instruction at least indicates target color space data and attribute information related to the plurality of objects to be colored; and generating target color space representation data associated with the plurality of objects to be colored based on the second mapping relationship data, the target color space data and attribute information; and causing at least some coloring devices among the plurality of coloring devices to perform digital printing on the plurality of objects to be colored, respectively, based on the target color space representation data, so as to output a target color.

According to a second aspect of the present disclosure, there is provided a computing device. The device comprises: at least one processing unit; at least one memory coupled to the at least one processing unit and storing instructions executable by the at least one processing unit, wherein the instructions, when executed by the at least one processing unit, cause the computing device to perform the method of the first aspect of the present disclosure.

According to a third aspect of the present disclosure, there is provided a computer-readable storage medium. The computer-readable storage medium storing machine executable instructions, wherein the machine executable instructions, when executed, cause a machine to perform the method of the first aspect of the present disclosure.

In some embodiments, the method for printing an object to be colored further comprises: determining a first mapping relationship data of a management device, wherein the first mapping relationship data indicates a mapping relationship between the plurality of standard colors in the predetermined standard color set and colors displayed on a display of the management device.

In some embodiments, the plurality of objects to be colored are used for architectural decoration materials, and the plurality of coloring devices are multi-color channel digital printing devices.

In some embodiments, the plurality of objects to be colored are a number of the following: textile materials, wall decoration materials, bathroom materials, wood flooring veneer materials, floor tile veneer materials, door and window veneer materials and furniture veneer materials used for target house decoration; the target color space data and attribute information related to the plurality of objects to be colored is determined via a predetermined application program for target house design loaded by the management device.

In some embodiments, generating target color space representation data associated with the plurality of objects to be colored based on the second mapping relationship data, the target color space data and attribute information comprises: at the management device, determining whether the target color related to the object to be colored determined in the predetermined standard color set is received; upon determining that the target color related to the objects to be colored determined in the predetermined standard color set is received, converting the target color into target color display representation data associated with the display of the management device based on the first mapping relationship data, so as to render a three-dimensional space model of the object to be colored based on the target color display representation data for displaying an image of the object to be colored at the management device, wherein the management device is used for designing a target house; determining whether a confirmation instruction for the image of the object to be colored is detected; upon determining that the confirmation instruction for the image of the object to be colored is detected, generating the target color space representation data based on the determined target color.

In some embodiments, the method for printing an object to be colored further comprises: at the management device, upon determining that the confirmation instruction for the image of the object to be colored is detected, generating an order related to the object to be colored based on the three-dimensional space model, wherein the order at least indicates an identification of a target coloring device, the printing instruction, size information and quantity information of the object to be colored, and delivery time information and delivery position information; and sending the order to at least one of the target coloring device and a control device of the target coloring device.

In some embodiments, the method for printing an object to be colored further comprises: determining a first target color of a first object to be colored for generating a first order related to the first object to be colored, wherein the first order at least indicates an identification of a first target coloring device and a first target color space representation data corresponding to the first target color, the first object to be colored is at least one object to be colored of the plurality of objects to be colored associated with a target house; and determining a second target color of a second object to be colored based on the first target color for generating a second order related to the second object to be colored, wherein the second order at least indicates an identification of a second target coloring device and a second target color space representation data corresponding to the second target color, the second object to be colored is included in the plurality of objects to be colored, and attributes of the second object to be colored are different from those of the first object to be colored.

In some embodiments, the predetermined coloring consistency condition comprises at least two of the following: for the same object to be colored, maximum output intensity of a single channel of the plurality of coloring devices is consistent; for the same object to be colored, output curve feature of the single channel of the plurality of coloring devices is consistent; and for the same object to be colored, gray balance of the plurality of coloring devices is consistent.

In some embodiments, determining the second mapping relationship data of the reference coloring device included in the plurality of coloring devices comprises: establishing, based on the reference coloring device, a second mapping relationship table between the plurality of standard colors in the predetermined standard color set and the plurality of output colors of the reference coloring device; and performing an interpolation transformation on data in the second mapping relationship table, so as to generate the second mapping relationship data for indicating an output color of the reference coloring device corresponding to each standard color in the predetermined standard color set.

The summary is provided to introduce the selection of concepts in a simplified form, which are further described in the detailed description of embodiments below. The summary is not intended to identify key features or essential features of the present disclosure, nor is it intended to be used to limit the scope of the present disclosure.

### BRIEF DESCRIPTION OF THE DRAWINGS

FIG. 1 illustrates a schematic diagram of a system for implementing a method for printing an object to be colored according to embodiments of the present disclosure.
FIG.2 illustrates a flowchart of a method for printing an object to be colored according to embodiments of the present disclosure.
FIG.3 illustrates a flowchart of a method for generating target color space representation data associated with the plurality of objects to be colored according to embodiments of the present disclosure.
FIG.4 illustrates a flowchart of a method for determining color space representation data of a second object to be colored based on the color of a first object to be colored according to embodiments of the present disclosure.
FIG.5 illustrates a flowchart of a method for generating a second mapping relationship data according to embodiments of the present disclosure.
FIG.6 schematically illustrates a block diagram of an electronic device suitable for implementing embodiments of the present disclosure.

In the various drawings, the same or corresponding reference numerals indicate the same or corresponding components.

### DETAILED DESCRIPTION OF EMBODIMENTS

Hereinafter, preferred embodiments of the present disclosure will be described in more detail with reference to the accompanying drawings. Although preferred embodiments of the present disclosure are shown in the drawings, it should be understood that the present disclosure can be embodied in various forms and should not be limited by the embodiments set forth herein. Rather, these embodiments are provided so that the present disclosure can be more thorough and complete, and the scope of the present disclosure will fully convey to those skilled in the art.

As used herein, the term "includes" and its variants are to be read as open-ended terms that mean "includes, but is not limited to." The term "or" is to be read as "and/or" unless the context clearly indicates otherwise. The term "based on" is to be read as "based at least in part on." The terms "one example embodiment" and "one embodiment" are to be read as "at least one example embodiment." The term "a further embodiment" is to be read as "at least one further embodiment." The terms "first", "second" and so on can refer to same or different obj ects.

As afore-mentioned, the traditional schemes for printing objects to be colored have the disadvantages that: it is difficult to achieve consistency in actual color presented by a plurality of objects to be colored that are printed by different printing devices (especially printing devices of different manufacturers), and it is difficult to ensure that the actual color presented by the object to be colored is consistent with the designed color.

To at least partially address one or more of the above problems and other potential problems, example embodiments of the present disclosure provide a scheme for printing an object to be colored. In the scheme, by adjusting a plurality of coloring devices arranged in a distributed manner to make their output color features conform to a predetermined coloring consistency condition, and associating a second mapping relationship data indicating the corresponding relationship between standard colors and output colors of a reference coloring device with each coloring device, the present disclosure enables output color of each coloring device to establish connection with a uniform standard color description, regardless of the individual coloring device, the material of the object to be colored, and the processing process. Further, the color expression is unique. In addition, by generating target color space representation data associated with the plurality of objects to be colored based on the second mapping relationship data, target color space data and attribute information related to the plurality of objects to be colored in the acquired printing instruction; and causing at least some coloring devices among the plurality of coloring devices to perform digital printing on the plurality of objects to be colored, respectively, so as to output a target color, the present disclosure may use a uniform standard color in remote transmission of printing parameters of the object to be colored, and when providing color to different printing devices to present color. Therefore, it may ensure the consistency of color expression of the object to be colored during the design and processing process, and thereby it may effectively improve the consistency between the actual color presented by the object to be colored and the designed color.

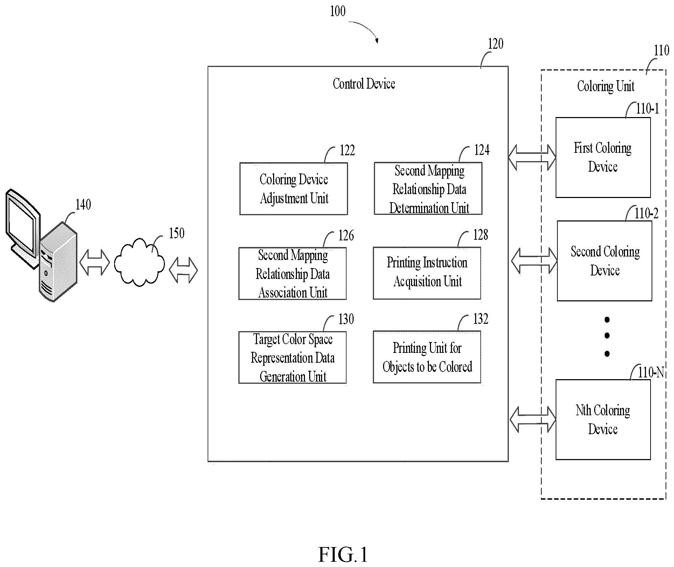

FIG.1 illustrates a schematic diagram of a system 100 for implementing a method for printing an obj ect to be colored according to embodiments of the present disclosure. As shown in FIG.1, the system 100 includes, for example, a plurality of coloring devices 110, a control device 120 of the coloring devices, a management device 140, and a network 150. The management device 140 may conduct data interaction with the control device 120 in a wired or wireless manner via the network 150.

The plurality of coloring devices 110 are, for example, multi-color channel digital printing devices belonging to the same manufacturer or different manufacturers and used for printing objects to be colored with different attributes based on the printing instructions in the received order. For example, the system 100 includes such as a first coloring device 110-1, a second coloring device 110-2 to an Nth coloring device 110-N. The first coloring device 110-1 is, for example, a digital printing machine for producing wood flooring veneer decorative paper. The second coloring device 110-2 is, for example, a digital printing machine for producing wall tile decorative board. The Nth coloring device 110-N is, for example, a digital printing machine for producing cabinet decorative board.

The control device 120 is used for controlling coloring devices 110 and data interaction with the management device 140. In particular, the control device 120 is used for adjusting a plurality of coloring devices arranged in a distributed manner; determining a second mapping relationship data of a reference coloring device included in the plurality of coloring devices; and associating the determined second mapping relationship data with the plurality of coloring devices. The control device 120 may also acquire a printing instruction related to a plurality of objects to be colored from the management device 140; generating target color space representation data associated with the plurality of objects to be colored based on the second mapping relationship data, the target color space data and attribute information; and causing at least some coloring devices among the plurality of coloring devices to perform digital printing on the plurality of objects to be colored, respectively. In some embodiments, the system 100 includes a centralized control device 120 for controlling the plurality of coloring devices 110. In some embodiments, the system 100 may include a plurality of control devices 120, for example, a first control device to an Nth control device (not shown in FIG.1). Each control device is used for controlling a corresponding coloring device 110. For example, the first control device is used for controlling the first coloring device 110-1. The second control device is used for controlling the second coloring device 110-2. The Nth control device is used for controlling the Nth coloring device 110-N. In some embodiments, the control device 120 may be integrated on the coloring device 110, or may set separately from the coloring device 110. In some embodiments, the control device 120 may have one or more processing units, including dedicated processing units such as GPU, FPGA and ASIC, and general processing units such as CPU. In addition, one or more virtual machines may run on the control device 120. In some embodiments, the control device 120 includes, for example, a coloring device adjustment unit 122, a second mapping relationship data determination unit 124, a second mapping relationship data association unit 126, a printing instruction acquisition unit 128, a target color space representation data generation unit 130, and a printing unit 132 for objects to be colored.

The coloring device adjustment unit 122 is used for adjusting a plurality of coloring devices arranged in a distributed manner, so that output color features of the plurality of coloring devices conform to a predetermined coloring consistency condition.

The second mapping relationship data determination unit 124 is used for determining a second mapping relationship data of a reference coloring device included in the plurality of coloring devices. The second mapping relationship data indicates a mapping relationship between a plurality of standard colors in a predetermined standard color set and a plurality of output colors of the reference coloring device.

The second mapping relationship data association unit 126 is used for associating the determined second mapping relationship data with the plurality of coloring devices.

The printing instruction acquisition unit 128 is used for acquiring a printing instruction related to a plurality of objects to be colored. The printing instruction at least indicates target color space data and attribute information related to the plurality of objects to be colored.

The target color space representation data generation unit 130 is used for generating target color space representation data associated with the plurality of objects to be colored based on the second mapping relationship data, the target color space data and attribute information.

The printing unit 132 for objects to be colored is used for causing at least some coloring devices among the plurality of coloring devices to perform digital printing on the plurality of objects to be colored, respectively, based on the target color space representation data, so as to output a target color.

The management device 140 is, for example, but not limited to, one or more computers or servers of a designer of a target house, and is used for designing the target house, displaying renderings of architectural decoration materials of the target house, and generating orders related to the architectural decoration materials of the target house. In some embodiments, the management device 140 is, for example, a computing device for realizing a platform for precise personalized customization of whole house decoration. Specifically, the management device 140 is used for determining a first mapping relationship data of the mapping relationship between standard colors and colors displayed on a display of the management device; converting the target color into target color display representation data associated with the display of the management device based on the first mapping relationship data, so as to display an image of the object to be colored at the management device; and, if determining that the confirmation instruction for the image of the object to be colored is detected, generating the target color space representation data based on the determined target color. In addition, the management device 140 is further used for, if the confirmation instruction for the image of the object to be colored is detected, generating an order related to the object to be colored, and sending the order to at least one of the target coloring devices and a control device of the target coloring device. In some embodiments, the management device 140 may have one or more processing units, including dedicated processing units such as GPU, FPGA, and ASIC, and general processing units such as CPU. In addition, one or more virtual machines may run on the management device 140. In some embodiments, the management device 140 and the control device 120 are integrated.

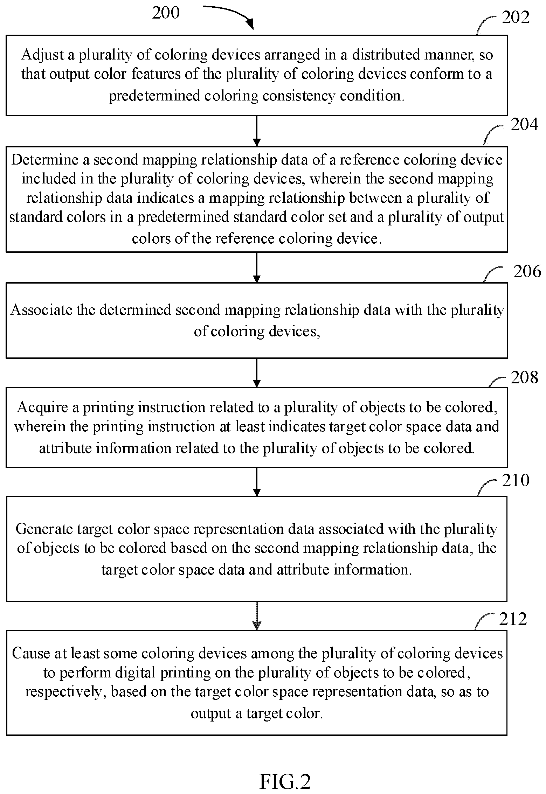

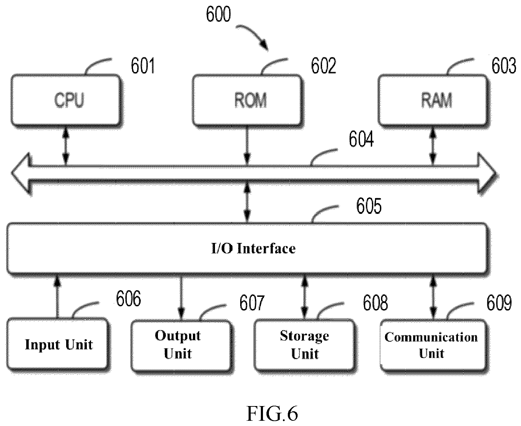

FIG.2 illustrates a flowchart of a method 200 for printing an object to be colored according to embodiments of the present disclosure. It should be understood that the method 200 may, for example, be performed at the electronic device 600 shown in FIG.6. It may also be performed at the control device 120, or be performed at the management device 140 shown in FIG. 1. It should be appreciated that, the method 200 may also include additional actions not shown and/or may omit the shown actions, and the scope of the present disclosure is not limited in this respect.

In step 202, the control device 120 adjusts a plurality of coloring devices arranged in a distributed manner, so that output color features of the plurality of coloring devices conform to a predetermined coloring consistency condition.

The coloring devices are, for example, multi-color channel digital printing devices. In some embodiments, the plurality of coloring devices are, for example, multi-color channel digital printing devices respectively belonging to different manufacturers and used for printing objects to be colored with different attributes based on the printing instructions in the received order. For example, a first coloring device among the plurality of coloring devices is, for example, used for printing curtain materials; a second coloring device is, for example, used for printing wood flooring veneer materials; an Nth coloring device is, for example, used for printing wall decoration materials. It should be appreciated that, since the materials of traditional objects to be colored are different, the corresponding production processes are different, and coloring devices from different manufacturers show non-uniqueness in color representation and control data, even if the same standard color given value is used, the final colors printed by different coloring devices are inconsistent. Therefore, it is necessary to adjust the plurality of coloring devices arranged in a distributed manner, so that the output color features of the plurality of coloring devices conform to a predetermined coloring consistency condition.

The predetermined coloring consistency condition, for example, includes at least two of the following: for the same object to be colored, the maximum output intensity of the single channel of the plurality of coloring devices is consistent; for the same object to be colored, the output curve feature of the single channel of the plurality of coloring devices is consistent; and for the same object to be colored, the gray balance of the plurality of coloring devices is consistent.

The method of adjusting a plurality of coloring devices arranged in a distributed manner, for example, includes: the control device 120, first, causes the maximum output intensity of the single channel of the plurality of coloring devices to be consistent for the same object to be colored; then, causes the output curve feature of the single channel of the plurality of coloring devices to be consistent for the same object to be colored; and adjusts the input (logical) ink amount (%) of the plurality of the primary color channels (e.g., CMYK4 primary color channels), so as to cause the gray balance of the plurality of coloring devices to be consistent for the same object to be colored.

The method of causing the maximum output intensity of the single channel to be consistent, for example, includes: the control device 120 acquires output curves of primary color channels of a plurality of coloring devices for the same object to be colored; determines the output intensity (or density) of coloring devices corresponding to 100% logical ink amount (i.e., input ink amount) of primary color channels of the plurality of coloring devices based on the acquired output curves; takes the logical ink amount and the corresponding output intensity of the coloring device with the lowest output intensity among the plurality of coloring devices as a benchmark, and determines the input ink amount corresponding to the lowest output intensity of the remaining coloring devices among the plurality of coloring devices as 100% of the corrected logical ink amount, thereby achieving the output intensity of the coloring device corresponding to 100% of the logical ink amount of the single channel of the plurality of coloring devices being consistent for the same object to be colored. For example, the output intensity of the coloring device D at 100% of the logical ink amount is the lowest among the plurality of coloring devices, and the output intensity of the current coloring device C at 100% of the logical ink amount is greater than the lowest output intensity. Then, for example, determine 90% of the logical ink amount of the coloring device C as 100% of the corrected logical ink amount, so that the output intensity corresponding to 100% of the corrected logical ink amount of the coloring device C is consistent with the output intensity of the coloring device D at 100% of the logical ink amount. And so on, so that the 100% of the logical ink amount of the remaining coloring devices among the plurality of coloring devices are corrected.

It should be understood that, the output curve feature of the primary color channel of the plurality of coloring devices being consistent for the same object to be colored means that the visual linear feature of the primary color channel of the plurality of devices is consistent for the same object to be colored. In some embodiments, the visual linear feature is characterized by the dot expansion rate of a single channel for the same object to be colored. Wherein, a dot is the basic element that constitutes the image of the object to be colored. A dot is also the smallest unit of printing ink or ink adhesion of the coloring device. A dot expansion refers to the gain of dots printed on the object to be colored. In lithographic printing, dot expansion usually occurs. Dot expansion is usually related to the color of the ink, color density, and materials of the object to be colored. Different colors of the ink, color densities, and materials of the object to be colored result in different dot expansion rates. For example, with the increase of the color density, the dot expansion rate increases. The higher the smoothness of the object to be colored, the smaller the dot expansion value; while the lower the smoothness of the object to be colored, the larger the dot expansion value. For example, if printing 50% gray, the amount of ink required by the coloring device is different for different materials of the objects to be colored.

For the method of causing the gray balance of the plurality of coloring devices to be consistent for the same object to be colored, it should be understood that, if an equal proportion of CMY is output as, for example, a neutral gray color, adjust the proportion of the input ink amount of the CMY primary color channel to make the output neutral gray consistent. For example, if the color is relatively red, reduce the ink proportion of the M primary channel (i.e., the magenta primary channel).

In step 204, the control device 120 determines a second mapping relationship data of a reference coloring device included in the plurality of coloring devices, wherein the second mapping relationship data indicates a mapping relationship between a plurality of standard colors in a predetermined standard color set and a plurality of output colors of the reference coloring device. The predetermined standard color set includes a plurality of uniform standard colors. The plurality of uniform standard colors defines a plurality of abstract standard color expressions, and the color expression is unique and is irrelevant to the display device, processing device, object material and processing process. Regardless of the color selection and labeling in the design software of the management device, the remote transmission of the target color parameters of the object to be colored (i.e., the object to be printed) indicated in the printing order, and color presentation by sending to a display device or different coloring devices, the color expression of the uniform standard colors is used to ensure the consistency of the color expression of the object to be colored (i.e., the object to be printed) during the design and processing.

The second mapping relationship data, for example, indicates a second mapping relationship table between the plurality of standard colors in the predetermined standard color set and the plurality of output colors of the reference coloring device.

The predetermined standard color set includes a plurality of standard colors. Each standard color corresponds to a unique standard color representation data. The standard color is irrelevant to the display of the management device, coloring device, materials of the object to be colored, and the processing process of the object to be colored. The predetermined standard color set is used for selecting and labeling the target color of the object to be colored at the management device. The target color space representation data indicated in the printing instruction transmitting between the management device and the target coloring device and/or the control device of the target coloring device is also generated based on the selected target color. There is a mapping relationship between the output colors of different coloring devices and standard colors among the standard color set.

By using the above means, the present disclosure may lead to the consistency of the color expression on which objects to be colored are based during the process of design, printing instruction transmission, and printing, and is beneficial to the coloring device to realize the accurate restoration of the standard target color determined at the management device.

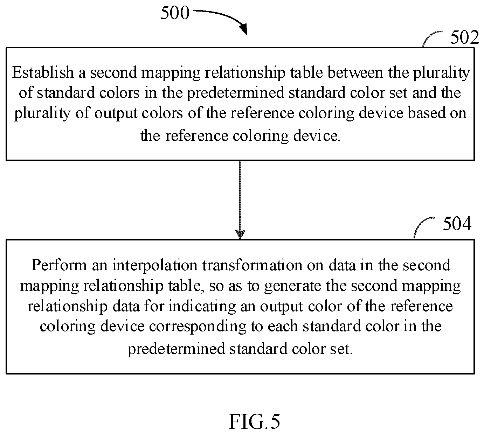

The reference coloring device is, for example, at least one coloring device among the plurality of coloring devices. The method of determining the second mapping relationship data of the reference coloring device, for example, includes: based on the reference coloring device, establishing a second mapping relationship table between the plurality of standard colors in the predetermined standard color set and the plurality of output colors of the reference coloring device; and perform an interpolation transformation on data in the second mapping relationship table, so as to generate the second mapping relationship data for indicating an output color of the reference coloring device corresponding to each standard color in the predetermined standard color set. The method 500 for determining the second mapping relationship data of the reference coloring device will be further described below with reference to FIG.5, and will not be repeated here.

In step 206, the control device 120 associates the determined second mapping relationship data with the plurality of coloring devices.

In step 208, the control device 120 acquires a printing instruction related to a plurality of objects to be colored, wherein the printing instruction at least indicates target color space data and attribute information related to the plurality of objects to be colored.

The plurality of objects to be colored, for example, are used for architectural decoration materials. Specifically, the plurality of objects to be colored are, for example, a number of the following: textile materials, wall decoration materials, bathroom materials, wood flooring veneer materials, floor tile veneer materials, door and window veneer materials and furniture veneer materials used for target house decoration. The target color space data and attribute information related to the plurality of objects to be colored is, for example, determined via a predetermined application program for target house design loaded by the management device.

In step 210, the control device 120 generates target color space representation data associated with the plurality of objects to be colored based on the second mapping relationship data, the target color space data and attribute information.

The attribute information is, such as but not limited to, materials of objects to be colored.

In step 212, the control device 120 causes at least some coloring devices among the plurality of coloring devices to perform digital printing on the plurality of objects to be colored, respectively, based on the target color space representation data, so as to output a target color.

In the above scheme, by adjusting a plurality of coloring devices arranged in a distributed manner to make their output color features conform to a predetermined coloring consistency condition, and associating a second mapping relationship data indicating the corresponding relationship between standard colors and output colors of a reference coloring device with each coloring device, the present disclosure enables output color of each coloring device to establish connection with a uniform standard color description, regardless of the individual coloring device, the material of the object to be colored, and the processing process. Further, the color expression is unique. In addition, by generating target color space representation data associated with the plurality of objects to be colored based on the second mapping relationship data, target color space data and attribute information related to the plurality of objects to be colored in the acquired printing instruction; and causing at least some coloring devices among the plurality of coloring devices to perform digital printing on the plurality of objects to be colored, respectively, so as to output a target color, the present disclosure may use a uniform standard color in remote transmission of printing parameters of the object to be colored, and when providing color to different printing devices to present color. Therefore, it may ensure the consistency of color expression of the object to be colored during the design and processing process, and thereby it may effectively improve the consistency between the actual color presented by the object to be colored and the designed color.

In some embodiments, the method 200 further includes: the control device 120 determines a first mapping relationship data of a management device, wherein the first mapping relationship data indicates a mapping relationship between the plurality of standard colors in the predetermined standard color set and colors displayed on a display of the management device.

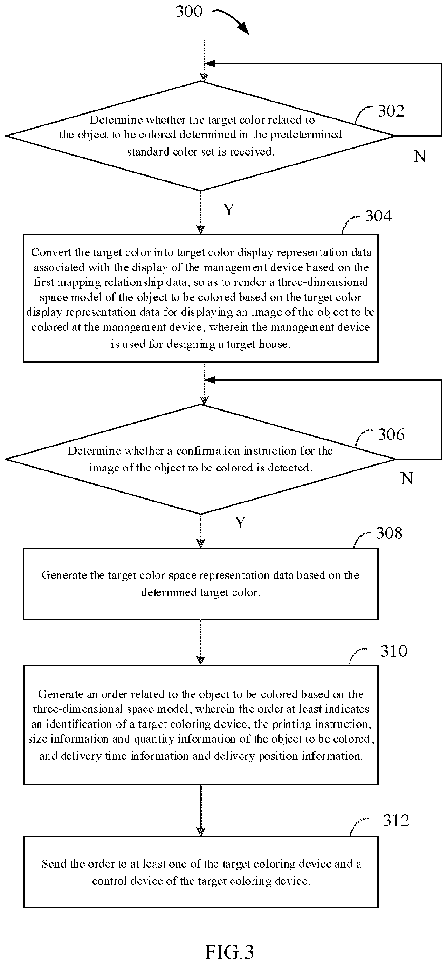

FIG.3 illustrates a flowchart of a method 300 for generating target color space representation data associated with the plurality of objects to be colored according to embodiments of the present disclosure. It should be understood that, the method 300 may, for example, be performed at the electronic device 600 shown in FIG.6. It may also be performed at the management device 140 shown in FIG. 1. It should be appreciated that, the method 300 may also include additional actions not shown and/or may omit the shown actions, and the scope of the present disclosure is not limited in this respect.

In step 302, the management device 140 determines whether the target color related to the object to be colored determined in the predetermined standard color set is received.

The management device 140 is, for example, used for designing the surface layer of all architectural decoration materials of the target house in uniform color and pattern, displaying simulation effect, size determination, and generating and sending orders for the manufacturer's coloring device to print architectural decoration materials. The management device 140 is equipped with a material library, a pattern texture library and a color matching library for architectural decoration materials with different attributes. Wherein, the architectural decoration materials include, such as but not limited to, floor materials, wall materials, cabinet board materials, roof materials, bathroom materials, kitchen materials, whole house soft cloth materials (e.g., sofa cloth materials, curtain materials), and furniture veneer materials. The design color of each architectural decoration materials with different attributes of the target house is to use one or more standard colors determined in a predetermined standard color set as the target color of the object to be colored. For example, in an interactive design, the color of curtain materials is specified as standard color A in a predetermined standard color set. That is, the target color of the object to be colored is standard color A.

In step 304, the management device 140 converts the target color into target color display representation data associated with the display of the management device based on the first mapping relationship data, so as to render a three-dimensional space model of the object to be colored based on the target color display representation data for displaying an image of the object to be colored at the management device, wherein the management device is used for designing a target house. The first mapping relationship data is, such as but not limited to a first mapping relationship table between display color detection values of the display of the management device and standard colors.

The first mapping relationship data indicates the mapping relationship between the plurality of standard colors in the predetermined standard color set and the colors displayed by the display of the management device.

It should be understood that, different displays will transform into different colors Bi for the same standard color A, in order to ensure that the same standard color A appearance is presented on different display devices. The management device 140 of the present disclosure will determine the first mapping relationship data of the management device in advance. The first mapping relationship data (for example, the first mapping relationship table) indicates the mapping relationship between a plurality of standard colors in a predetermined standard color set and colors displayed on the display of the management device.

The method of determining the first mapping relationship data, for example, includes: the management device 140 selects a second predetermined number of standard colors (e.g., RGB standard colors); then measures, via a measuring apparatus, display color detection values of the display of the management device for the second predetermined number of standard colors; establishes the first mapping relationship table between display color detection values of the display of the management device and standard colors; and then performs an interpolation transformation on data in the first mapping relationship table, so as to generate the first mapping relationship data for indicating the displayed color of the display device of the management device 140 corresponding to each standard color in the predetermined standard color set.

For example, if the management device 140 determines that the target color (i.e., standard color A) of the curtain materials is received and sent to the management device 140 for display, convert the standard color A into the display color B of RGB related to the current display of the management device based on the first mapping relationship data, which is used for displaying an image of the object to be colored on the current display based on the display color B. If the management device 140 detects that an adjustment of the color of the displayed image of the object to be colored made by the designer, adjust the target color of the object to be colored accordingly, and then convert the adjusted target color into the display color of RGB related to the current display device of the management device based on the first mapping relationship data, which is used for the designer to determine whether to continue adjusting the target color.

In step 306, the management device 140 determines whether a confirmation instruction for the image of the object to be colored is detected.

In step 308, if the management device 140 determines that the confirmation instruction for the image of the object to be colored is detected, generate the target color space representation data based on the determined target color.

In step 310, the management device 140 generates an order related to the object to be colored based on the three-dimensional space model, wherein the order at least indicates an identification of a target coloring device, the printing instruction, size information and quantity information of the object to be colored, and delivery time information and delivery position information.

In step 312, the management device 140 sends the order to at least one of the target coloring device and a control device of the target coloring device.

By adopting the above technical means, the present disclosure automatically generates and sends an order to a corresponding target coloring device based on the selected color of the object to be colored, and the target color space representation data indicated in the printing instruction in the order is expressed based on standard colors. Therefore, not only the color design will not be affected by color deviation of the display of the management device, but also the design and printing of the color of the object to be colored can realize what you see is what you get. Thereby, it may realize the color consistency of the whole home decoration process from design to processing, and the precise personalized customization of whole house decorative objects.

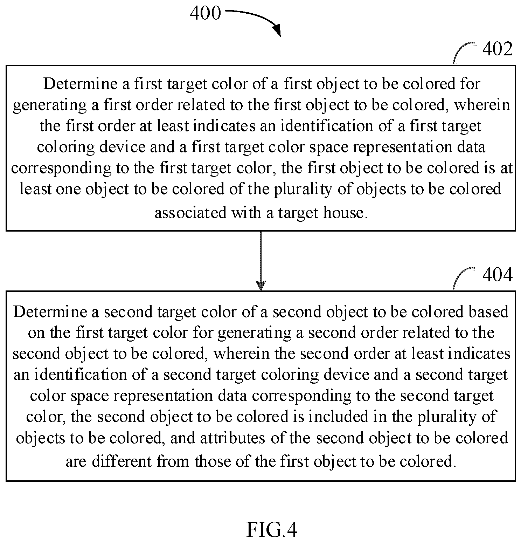

FIG.4 illustrates a flowchart of a method 400 for determining color space representation data of a second object to be colored based on the color of a first object to be colored according to embodiments of the present disclosure. It should be understood that, the method 400 may, for example, be performed at the electronic device 600 shown in FIG.6. It may also be performed at the management device 140 shown in FIG. 1. It should be appreciated that, the method 400 may also include additional actions not shown and/or may omit the shown actions, and the scope of the present disclosure is not limited in this respect.

In step 402, the management device 140 determines a first target color of a first object to be colored for generating a first order related to the first object to be colored, wherein the first order at least indicates an identification of a first target coloring device and a first target color space representation data corresponding to the first target color, the first object to be colored is at least one object to be colored of the plurality of objects to be colored associated with a target house.

For example, a first object to be colored is, for example, a sofa textile material of a target house. The first target color is, for example, Berlin Blue. The first target color space representation data is, for example, that CMYK is [C:100, M:51, Y:11, K:1]. CMYK is a printing color mode, which is different from RGB color mode. CMYK stands for the four colors used in printing, where C stands for Cyan, M stands for Magenta, Y stands for Yellow, and K stands for Black. For example, the management device 140 generates a first order related to the sofa textile material. The first order at least indicates the identification of a first target coloring device (e.g., the second color coloring device shown in FIG. 1, which is used for digitally printing the sofa textile material of the target house based on the first order) and the first target color space representation data corresponding to Berlin Blue, such as [C: 100, M:51, Y:11, K:1].

In step 404, the management device 140 determines a second target color of a second object to be colored based on the first target color for generating a second order related to the second object to be colored, wherein the second order at least indicates an identification of a second target coloring device and a second target color space representation data corresponding to the second target color, the second object to be colored is included in the plurality of objects to be colored, and attributes of the second object to be colored are different from those of the first object to be colored.

In some embodiments, the second target color may be the same as the first target color, or a matching color of the same color system different from the first target color. For example, a second obj ect to be colored is, for example, a curtain textile material of the target house. The second target color is, for example, Qiubo Blue that matches the first target color (i.e., Berlin Blue). The second target color space representation data is, for example, that CMYK is [C:59, M:12, Y:19, K:0]. For example, the management device 140 generates a second order related to the curtain textile material. The second order at least indicates the identification of a second target coloring device (e.g., a third coloring device not shown in FIG.1), and the target coloring device is used for digitally printing the curtain textile material of the target house based on the second order. The second order also at least indicates the second target color space representation data corresponding to Qiubo Blue, such as [C:100, M:51, Y:11, K:1].

By adopting the above means, the present disclosure can coordinate and match colors of a plurality of objects to be colored with different attributes in a target house, and further enable coordination of target colors of the plurality of objects to be colored with different attributes that reflected by the target color space representation data sent to the corresponding printing device and reflected by the actual printing effect of the printing device. Therefore, the present disclosure is beneficial to the matching degree of actual printing effect of different decorative materials in the same target house. In addition, by adopting the above means, the present disclosure can also realize precise personalized customization of color matching of individual decorative objects in the whole house.

FIG.5 illustrates a flowchart of a method 500 for generating a second mapping relationship data according to embodiments of the present disclosure. It should be understood that, the method 500 may, for example, be performed at the electronic device 600 shown in FIG.6. It may also be performed at the management device 140 shown in FIG.1. It should be appreciated that, the method 500 may also include additional actions not shown and/or may omit the shown actions, and the scope of the present disclosure is not limited in this respect.

In step 502, the control device 120 establishes a second mapping relationship table between the plurality of standard colors in the predetermined standard color set and the plurality of output colors of the reference coloring device based on the reference coloring device.

For example, the control device 120 selects a predetermined number (for example, hundreds or thousands) of standard color points evenly distributed in the entire color gamut of a reference coloring device; and then measures output color detection values of the reference coloring device of the predetermined number of standard color points via a measuring apparatus; establishes a second mapping relationship table (or referred to as "second mapping table") between the output color detection values of the reference coloring device and the standard colors. It should be understood that, the color space is a multi-dimensional space. Taking the CMY color space as an example, the second mapping relationship table is, for example, divided into a plurality of cubes, and the vertices of the cubes are the output color detection values of the reference coloring device corresponding to the standard color points in the second mapping relationship table.

In step 504, the control device 120 performs an interpolation transformation on data in the second mapping relationship table, so as to generate the second mapping relationship data for indicating an output color of the reference coloring device corresponding to each standard color in the predetermined standard color set.

For example, the control device 120 determines whether an output color detection value of the reference coloring device corresponding to the current standard color point exists in the second mapping relationship data; if determining that the second mapping relationship data does not include the output color detection value of the reference coloring device corresponding to the current standard color point (e.g., the current standard color point falls in the middle of the mentioned afore-mentioned cube), determines the standard color point adjacent to the current standard color point; performs the interpolation transformation based on the output color detection value of the reference coloring device corresponding to the determined adjacent standard color point, so as to generate a calculated value of the output color of the reference coloring device corresponding to the current standard color; and adds the corresponding relationship between the calculated value of the output color of the reference coloring device and the current standard color to the second mapping relationship data.

The method of performing an interpolation transformation is, for example, calculating the difference between output color detection values of the reference coloring device corresponding to the adjacent standard color points based on a multi-dimensional linear interpolation algorithm.

By adopting the above means, the present disclosure can conveniently establish a relationship between the actual output color of a reference coloring device and the standard color in the whole color gamut.

FIG. 6 schematically illustrates a block diagram of an electronic device 600 suitable for implementing embodiments of the present disclosure. The device 600 may be a device for performing the method 200 to the method 500 shown in FIG.2 to FIG.5. As shown in FIG. 6, the device 600 includes a central processing unit (CPU) 601, which can execute various suitable actions and processing based on the computer program instructions stored in the read-only memory (ROM) 602 or computer program instructions loaded in the random-access memory (RAM) 603 from a storage unit 608. In the RAM, it can also store all kinds of programs and data required by the operations of the device 600. The CPU, the ROM and the RAM are connected to each other via a bus 604. The input/output (I/O) interface 605 is also connected to the bus 604.

A plurality of components in the device 600 is connected to the I/O interface 605, including: an input unit 606, an output unit 607, and a storage unit 608. The central processing unit 601 performs various methods and processes described above, such as the method 200 to the method 500. For example, in some embodiments, the method 200 to the method 500 can be implemented as a computer software program tangibly included in the machine-readable medium, such as the storage unit 608. In some embodiments, the computer program can be partially or fully loaded and/or mounted to the device 600 via the ROM and/or a communication unit 609. When the computer program is loaded to the RAM and executed by the CPU, one or more operations of the method 200 to the method 500 described above may be performed. Alternatively, in other embodiments, the CPU may be configured to perform one or more actions of the method 200 to the method 500 by any other suitable means (for example, by means of firmware).

It needs to be further illustrated that, the present disclosure can be method, apparatus, system, and/or computer program product. The computer program product may include a computer-readable storage medium, on which computer-readable program instructions for executing various aspects of the present disclosure are loaded.

The computer-readable storage medium can be a tangible apparatus that maintains and stores instructions utilized by the instruction executing apparatuses. The computer-readable storage medium can be, but not limited to, such as electrical storage device, magnetic storage device, optical storage device, electromagnetic storage device, semiconductor storage device or any appropriate combinations of the above. More concrete examples of the computer-readable storage medium (non-exhaustive list) include: portable computer disk, hard disk, random-access memory (RAM), read-only memory (ROM), erasable programmable read-only memory (EPROM or flash), static random-access memory (SRAM), portable compact disk read-only memory (CD-ROM), digital versatile disk (DVD), memory stick, floppy disk, mechanical coding devices, punched card stored with instructions thereon, or a projection in a slot, and any appropriate combinations of the above. The computer-readable storage medium utilized here is not interpreted as transient signals per se, such as radio waves or freely propagated electromagnetic waves, electromagnetic waves propagated via waveguide or other transmission media (such as optical pulses via fiber-optic cables), or electric signals propagated via electric wires.

The computer-readable program instruction described herein can be downloaded from the computer-readable storage medium to each computing/processing device, or to an external computer or external storage via Internet, local area network, wide area network and/or wireless network. The network can include copper-transmitted cable, optical fiber transmission, wireless transmission, router, firewall, switch, network gate computer and/or edge server. The network adapter card or network interface in each computing/processing device receives computer-readable program instructions from the network and forwards the computer-readable program instructions for storage in the computer-readable storage medium of each computing/processing device.

The computer program instructions for executing operations of the present disclosure can be assembly instructions, instructions of instruction set architecture (ISA), machine instructions, machine-related instructions, microcodes, firmware instructions, state setting data, or source codes or target codes written in any combinations of one or more programming languages, wherein the programming languages consist of object-oriented programming languages, e.g., Smalltalk, C++ and so on, and traditional procedural programming languages, such as "C" language or similar programming languages. The computer-readable program instructions can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider). In some embodiments, state information of the computer-readable program instructions is used to customize an electronic circuit, e.g., programmable logic circuit, field programmable gate array (FPGA) or programmable logic array (PLA). The electronic circuit can execute computer-readable program instructions to implement various aspects of the present disclosure.

Various aspects of the present disclosure are described here with reference to flow chart and/or block diagram of method, apparatus (system) and computer program products according to embodiments of the present disclosure. It should be understood that each block of the flow chart and/or block diagram and the combination of various blocks in the flow chart and/or block diagram can be implemented by computer-readable program instructions.

The computer-readable program instructions can be provided to the processing unit of general-purpose computer, dedicated computer or other programmable data processing apparatuses to manufacture a machine, such that the instructions that, when executed by the processing unit of the computer or other programmable data processing apparatuses, generate an apparatus for implementing functions/actions stipulated in one or more blocks in the flow chart and/or block diagram. The computer-readable program instructions can also be stored in the computer-readable storage medium and cause the computer, programmable data processing apparatus and/or other devices to work in a particular manner, such that the computer-readable medium stored with instructions contains an article of manufacture, including instructions for implementing various aspects of the functions/actions stipulated in one or more blocks of the flow chart and/or block diagram.

The computer-readable program instructions can also be loaded into computer, other programmable data processing apparatuses or other devices, so as to execute a series of operation steps on the computer, other programmable data processing apparatuses or other devices to generate a computer-implemented procedure. Therefore, the instructions executed on the computer, other programmable data processing apparatuses or other devices implement functions/actions stipulated in one or more blocks of the flow chart and/or block diagram.

The flow chart and block diagram in the drawings illustrate system architecture, functions and operations that may be implemented by system, method and computer program product according to multiple implementations of the present disclosure. In this regard, each block in the flow chart or block diagram can represent a module, a part of program segment or code, wherein the module and the part of program segment or code include one or more executable instructions for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Various implementations of the present disclosure have been described above and the above description is only exemplary rather than exhaustive and is not limited to the implementations of the present disclosure. Many modifications and alterations, without deviating from the scope and spirit of the explained various implementations, are obvious for those skilled in the art. The selection of terms in the text aims to best explain principles and actual applications of each implementation and technical improvements made in the market by each embodiment, or enable other ordinary skilled in the art to understand implementations of the present disclosure.

The above are only optional embodiments of the present disclosure and are not intended to limit the present disclosure. For those skilled in the art, the present disclosure is subject to various changes and variations. Any modifications, equivalent substitutions, improvements made within the spirit and principles of the present disclosure shall be included within the protection scope of the present disclosure.

## Claims

1. A method for printing an object to be colored, comprising:
adjusting a plurality of coloring devices arranged in a distributed manner, so that output color features of the plurality of coloring devices conform to a predetermined coloring consistency condition;
determining a second mapping relationship data of a reference coloring device included in the plurality of coloring devices, wherein the second mapping relationship data indicates a mapping relationship between a plurality of standard colors in a predetermined standard color set and a plurality of output colors of the reference coloring device;
associating the determined second mapping relationship data with the plurality of coloring devices;
acquiring a printing instruction related to a plurality of objects to be colored, wherein the printing instruction at least indicates target color space data and attribute information related to the plurality of objects to be colored; and
generating target color space representation data associated with the plurality of objects to be colored based on the second mapping relationship data, the target color space data and attribute information; and
causing at least some coloring devices among the plurality of coloring devices to perform digital printing on the plurality of objects to be colored, respectively, based on the target color space representation data, so as to output a target color.

2. The method according to claim 1, further comprising:
determining a first mapping relationship data of a management device, wherein the first mapping relationship data indicates a mapping relationship between the plurality of standard colors in the predetermined standard color set and colors displayed on a display of the management device.

3. The method according to claim 1, wherein the plurality of objects to be colored are used for architectural decoration materials, and the plurality of coloring devices are multi-color channel digital printing devices.

4. The method according to claim 3, wherein the plurality of objects to be colored are a number of the following: textile materials, wall decoration materials, bathroom materials, wood flooring veneer materials, floor tile veneer materials, door and window veneer materials and furniture veneer materials used for target house decoration; the target color space data and attribute information related to the plurality of objects to be colored is determined via a predetermined application program for target house design loaded by the management device.

5. The method according to claim 2, wherein generating target color space representation data associated with the plurality of objects to be colored based on the second mapping relationship data, the target color space data and attribute information comprises:
at the management device, determining whether the target color related to the object to be colored determined in the predetermined standard color set is received;
upon determining that the target color related to the objects to be colored determined in the predetermined standard color set is received, converting the target color into target color display representation data associated with the display of the management device based on the first mapping relationship data, so as to render a three-dimensional space model of the object to be colored based on the target color display representation data for displaying an image of the object to be colored at the management device, wherein the management device is used for designing a target house;
determining whether a confirmation instruction for the image of the object to be colored is detected;
upon determining that the confirmation instruction for the image of the object to be colored is detected, generating the target color space representation data based on the determined target color.

6. The method according to claim 5, further comprising:
at the management device, upon determining that the confirmation instruction for the image of the object to be colored is detected, generating an order related to the object to be colored based on the three-dimensional space model, wherein the order at least indicates an identification of a target coloring device, the printing instruction, size information and quantity information of the object to be colored, and delivery time information and delivery position information; and
sending the order to at least one of the target coloring device and a control device of the target coloring device.

7. The method according to claim 1, further comprising:
determining a first target color of a first object to be colored for generating a first order related to the first object to be colored, wherein the first order at least indicates an identification of a first target coloring device and a first target color space representation data corresponding to the first target color, the first object to be colored is at least one object to be colored of the plurality of objects to be colored associated with a target house; and
determining a second target color of a second object to be colored based on the first target color for generating a second order related to the second object to be colored, wherein the second order at least indicates an identification of a second target coloring device and a second target color space representation data corresponding to the second target color, the second object to be colored is included in the plurality of objects to be colored, and attributes of the second object to be colored are different from those of the first object to be colored.

8. The method according to claim 1, wherein the predetermined coloring consistency condition comprises at least two of the following:
for the same object to be colored, maximum output intensity of a single channel of the plurality of coloring devices is consistent;
for the same object to be colored, output curve feature of the single channel of the plurality of coloring devices is consistent; and
for the same object to be colored, gray balance of the plurality of coloring devices is consistent.

9. The method according to claim 1, wherein determining the second mapping relationship data of the reference coloring device included in the plurality of coloring devices comprises:
establishing, based on the reference coloring device, a second mapping relationship table between the plurality of standard colors in the predetermined standard color set and the plurality of output colors of the reference coloring device; and
performing an interpolation transformation on data in the second mapping relationship table, so as to generate the second mapping relationship data for indicating an output color of the reference coloring device corresponding to each standard color in the predetermined standard color set.

10. A computing device, comprising:
at least one processing unit;
at least one memory coupled to the at least one processing unit and storing instructions executable by the at least one processing unit, wherein the instructions, when executed by the at least one processing unit, cause the computing device to perform the method according to any of claims 1-9.

11. A computer-readable storage medium storing machine executable instructions which, when executed, cause a machine to perform the method according to any of claims 1-9.
